# EUROPEAN PATENT APPLICATION

(11) **EP 4 528 262 A1**
(43) Date of publication of application: **26.03.2025**
(21) Application number: 24200965.2
(22) Date of filing: 18.09.2024
(51) Int. Cl.: G01N 27/333, G01N 27/416, G01N 27/417

(54) **CALIBRATION MECHANISM, SENSOR UNIT AND ELECTROCHEMICAL MEASUREMENT DEVICE**

(30) Priority: 21.09.2023 JP 2023156490
(71) Applicant: Horiba Advanced Techno, Co., Ltd., Kyoto-shi, Kyoto 6018551 (JP)
(72) Inventor: BOUILLY, Guillaume Jacques, Kyoto-shi, Kyoto (JP)
(74) Representative: Isarpatent

(57) **Abstract**

There is provided a calibration mechanism that enables a general user having no specialized knowledge to easily perform a calibration task, and that is able to be used repeatedly. This calibration mechanism for an electrochemical measurement device is characterized in being provided with a calibration solution holding portion that holds a fluid and a calibration component forming a calibration solution that is used to calibrate an electrochemical measurement device that is provided with an ion-selective electrode, and with a fluid evaporation inhibiting portion that inhibits evaporation of the fluid from the calibration solution holding portion, and in that the calibration solution holding portion is able to be detached from and reattached to the ion-selective electrode, and in that the fluid evaporation inhibiting portion is able to be detached from and reattached to the ion-selective electrode together with the calibration solution holding portion.

## Description

### BACKGROUND OF THE INVENTION

### 1. TECHNICAL FIELD

This invention relates to a calibration mechanism that is installed and used in an ion-selective electrode of an electrochemical measurement device, a sensor unit that is equipped with this calibration mechanism, and an electrochemical measurement device that is equipped with this sensor unit.

### 2. DESCRIPTION OF THE RELATED ART

In a case in which a specific ion concentration present in a measurement target subject is measured using an ion-selective electrode, in order to make measurements that are as accurate as possible, a calibration operation is performed in order to match a potential detected by the ion-selective electrode with a display value of the ion concentration that is displayed to a user by the electrochemical measurement device.

A calibration operation performed by this type of electrochemical measurement device is a fairly complex operation for a user who is using the device due to normal safety management considerations and the like in the home, and there is a possibility that calibration will not be performed correctly.

Therefore, as is described in Patent Documents 1 and 2, consideration has been given to providing a sensor unit in which a sheet impregnated with a calibration solution is placed in contact with an ion-selective electrode. This sensor unit is set in the main body of the electrochemical measurement device and calibration is then performed. The sheet is then peeled away and the ion concentration in the measurement target is measured.

### DOCUMENTS OF THE PRIOR ART

### PATENT DOCUMENTS

Patent Document 1: Japanese Patent No. S63-289444
Patent Document 2: Japanese Patent No. 2013-32945

### SUMMARY OF THE INVENTION

However, in the case of this type of conventional sensor unit, it is necessary for the sensor unit to be changed after each use, which is not economical. Even so, if a user does repeatedly use this sensor unit, then the sheets impregnated with calibration solution need to be stored in a suitable environment. This may be difficult for a general user who lacks specialized knowledge so that the fluid component of the calibration solution with which the sheet is impregnated may evaporate. This may cause the component concentrations in the calibration solution to change and the problem arises that it may not be possible for calibration to be performed accurately.

The present invention was conceived in order to solve the above-described problems, and it is a principal object thereof to provide a calibration mechanism that enables a general user having no specialized knowledge to easily perform a calibration task, and that is able to be used repeatedly.

In other words, a calibration mechanism according to the present invention is provided with a calibration solution holding portion that holds a fluid and a calibration component forming a calibration solution, and a fluid evaporation inhibiting portion that inhibits evaporation of the fluid from the calibration solution holding portion, wherein the calibration solution holding portion is able to be detached from and reattached to the ion-selective electrode, and the fluid evaporation inhibiting portion is able to be detached from and reattached to the ion-selective electrode together with the calibration solution holding portion.

According to a calibration mechanism that is formed in this manner, because the calibration solution holding portion and the fluid evaporation inhibiting portion are able to be detached and reattached integrally with each other, the calibration solution holding portion can be easily prevented from coming into contact with the outside air, and fluid evaporation from the calibration solution holding portion can be suppressed. As a result, because it consequently becomes difficult for the composition of the calibration solution that is made up of the fluid and the calibration component held in the calibration solution holding portion of the calibration mechanism to change, even if a user has no specialized knowledge, they are still able to use the calibration mechanism repeatedly and accurately calibrate an electrochemical measurement device.

An example of a specific aspect of the present invention is a structure in which the calibration solution holding portion is in gel form, and the fluid evaporation inhibiting portion is a housing that internally houses the calibration solution holding portion.

It is also possible for the fluid evaporation inhibiting portion to be formed so as to be able to internally house the ion-selective electrode such that the ion-selective electrode is in contact with the calibration solution holding portion.

It is also possible for the calibration solution holding portion to be in a solid form, and for the calibration solution holding portion and the fluid evaporation inhibiting portion to be adhered to each other via an adhesive layer that is disposed between these.

A sensor unit that is provided with an ion-selective electrode and the above-described calibration mechanism, and also an electrochemical measurement device that is provided with this sensor unit are also part of the invention of the present application.

According to the present invention, it is possible to provide a calibration mechanism that enables a general user having no specialized knowledge to easily perform a calibration task, and that is able to be used repeatedly.

### BRIEF DESCRIPTION OF THE DRAWINGS

FIG. 1 is an overall schematic view of an electrochemical measurement device according to an embodiment of the present invention;
FIG. 2 is a schematic view showing an electrochemical measurement device according to the present embodiment in various states of use;
FIG. 3 is a schematic view of an electrochemical measurement device according to another embodiment of the present invention;
FIG. 4 is a schematic view of an electrochemical measurement device according to another embodiment of the present invention;
FIG. 5 is a schematic view of an electrochemical measurement device according to another embodiment of the present invention;
FIG. 6 is a schematic view showing the electrochemical measurement device shown in FIG. 4 in various states of use;
FIG. 7 is a schematic view showing an electrochemical measurement device according to another embodiment of the present invention;
FIG. 8 is a schematic view showing the electrochemical measurement device shown in FIG. 6 in various states of use;
FIG. 9 is a schematic view showing a sensor unit according to another embodiment of the present invention;
FIG. 10 is a schematic view showing an electrochemical measurement device according to another embodiment of the present invention; and
FIG. 11 is a schematic view showing the electrochemical measurement device shown in FIG. 9 in various states of use.

### DETAILED DESCRIPTION

Hereinafter, embodiments of the present invention will be described with reference made to the drawings.

[Basic Structure of an Electrochemical Measurement Device According to the Present Embodiment]

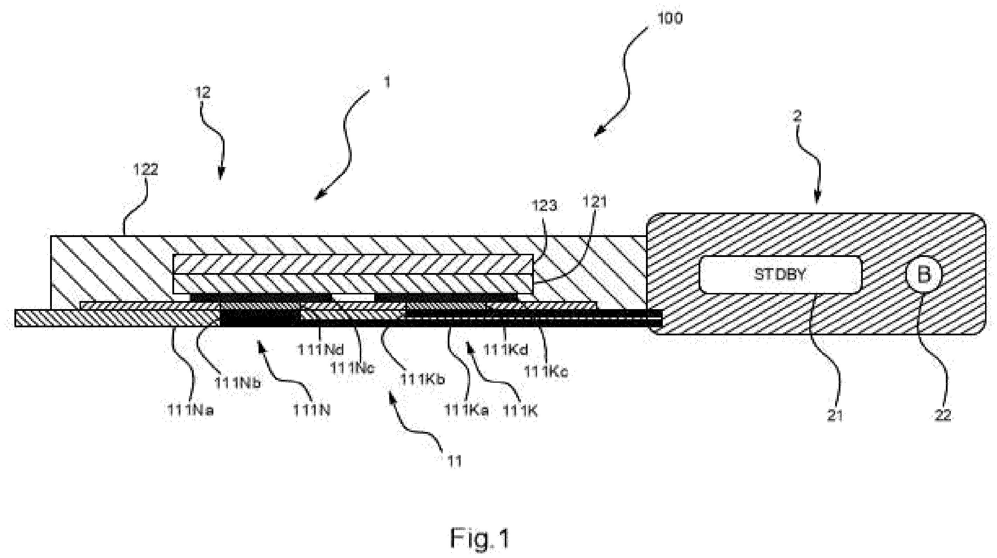

As is shown, for example, in FIG. 1, an electrochemical measurement device 100 according to the present embodiment measures an electrochemical property in the form of a ratio between concentrations of sodium ions/potassium ions in a measurement target in the form of a test solution, and is provided with a sensor unit 1 that includes sensors 11 that are placed in contact with the test solution and detect an electrochemical signal which corresponds to an electrochemical property of the test solution, and an information processing unit 2 that receives the electrochemical signal output from the sensor unit and calculates a sodium/potassium concentration ratio by processing this electrochemical signal.

In the present embodiment, the sensor unit 1 is provided, for example, with two types of ion-selective electrodes 111 that respond respectively to mutually different ions as the sensors 11, and with a temperature sensor (not shown in the drawings). In the present embodiment, the sensor unit 1 is a composite type of sensor unit in which this plurality of sensors 11 are formed on the same substrate so that surfaces of each sensor 11 that are in contact with a sample solution are disposed on substantially the same plane as each other.

In the present embodiment, the above-described two types of ion-selective electrodes 111 are formed by sodium ion-selective electrodes 111N and potassium ion-selective electrodes 111K.

The structure of these sodium ion-selective electrodes 111N and potassium ion-selective electrodes 111K may be as is shown, for example, in FIG. 1.

The sodium ion-selective electrodes 111N are provided with a substrate 111Na, an internal electrode 111Nb that is formed, for example, by a silver electrode on top of the substrate 111Na, an ion-sensitive membrane 111Nc that is mounted onto the internal electrode 111Nb, and an ion-electron conversion layer 111Nd that is mounted between the internal electrode 111Nb and the ion-sensitive membrane 111Nc so as to be in contact with both of these, and that is disposed between the internal electrode 111Nb and the ion-sensitive membrane 111Nc so as to connect these two together electrically.

The sodium ion-sensitive membrane 111Nc is formed by adding a plasticizer and a sodium ionophore to polyvinyl chloride (PVC), and then dissolving these in an organic solvent such as tetrahydrofuran (THF) or the like. The resulting mixture is then used to create a coating via a potting or inkjet printing method or the like. This is then heated so as to evaporate the organic solvent and create the solid sodium ion-sensitive membrane 111Nc. Examples of the sodium ionophore used here include Bis(12-crown-4) and the like. In addition, the solution that is used to form the sodium ion-sensitive membrane 111Nc may also contain, in addition to the plasticizer and sodium ionophore that are added to the polyvinyl chloride (PVC), an ionic additive or the like in the form of a phenyl borate-based ionic additive or the like.

The potassium ion-selective electrodes 111K are provided with a substrate 111Ka, an internal electrode 111Kb that is formed, for example, by a silver electrode on top of the substrate 111Ka, an ion-sensitive membrane 111Kc that is mounted onto the internal electrode 111Kb, and an ion-electron conversion layer 111Kd that is mounted between the internal electrode 111Kb and the ion-sensitive membrane 111Kc so as to be in contact with both of these, and that is disposed between the active electrode and the ion-sensitive membrane so as to connect these two together electrically.

The potassium ion-sensitive membrane 111Kc is formed in the same way as the sodium ion-sensitive membrane 111Nc apart from the fact that a potassium ionophore is used. Examples of the potassium ionophore used here include Bis(benzo-15-crown-5) and the like.

The ion-electron conversion layers 111Nd and 111Kd contain both an ion-electron conversion substance and an adhesive agent.

For example, a carbon microstructure may be used as the ion-electron conversion substance.

For example, substances including either one or two or more types selected from among carbon nanotubes, carbon nanofibers, carbon nanowalls, fullerenes, graphite, and graphenes may be used as the carbon microstructure. In the present embodiment, carbon nanotubes are used as an example of the ion-electron conversion substance.

The content of carbon microstructures that is contained in the ion-electron conversion layer 121c is preferably not less than 0.001% by mass and not more than 12.0% by mass, and more preferably not less than 0.001% by mass and not more than 0.02% by mass, and even more preferably not less than 0.003% by mass and not more than 0.01% by mass.

As the adhesive agent, compounds containing one or two or more types selected from among polyvinyl chloride (PVC), polystyrene, acrylate, polyvinyl butyral, polyamide, polyimide, polyurethane, polytetrafluoroethylene (PTFE), polysiloxane, copolymers of vinylidene fluoride and hexafluoropropylene (PVDF-HFP), and fluoropolysiloxane may be preferably used. These adhesive agents may be used individually or may be used in combinations of a plurality of different types. In addition, the adhesive agent may also contain a plasticizer in addition to the compounds described above.

In the present embodiment, the substrates 111Na and 111Ka that form part of the sodium ion-selective electrodes 111N and the potassium ion-selective electrodes 111K are formed by a single substrate, however, the present invention is not limited to this.

Each of the sensors 11 is electrically connected to an electrical circuit board or the like that forms part of the information processing unit 2 via lead wires or the like that are electrically connected to the respective internal electrodes 111Nb and 111Kb of the respective sensors 11.

The sensor unit 1 is formed so as to surround from the sides the entire area where the surface of all of the above-described sensors 11 that come into contact with the sample solution are formed, and is provided with a test solution holder that holds the test solution such that the test solution is in contact with the surfaces of all of the sensors 11.

The information processing unit 2 is provided with analog electrical circuits including buffers and amplifiers and the like, digital electrical circuits including a CPU, memory, and DSP and the like, A/D converters and the like that are interposed between these, and an information processing unit housing that contains all of these parts.

As a result of the CPU and peripheral devices thereof operating in mutual collaboration in accordance with a predetermined program stored in the memory, the information processing unit 2 is able to function as a data acquisition unit (not shown in the drawings) that acquires signals output from each of the sensors, and as a calculation unit (not shown in the drawings) that calculates measurement values such as ion concentration ratios and potential differences between the sensors 11 and the like based on the acquired data.

The information processing unit 2 may also function as a display unit 21 that displays measurement values calculated by the calculation unit as well as various states and the like of the electrochemical measurement device, and as an operating unit 22 or the like that is provided with input buttons and the like that are used to operate the electrochemical measurement device.

### [Characteristic Structure of the Electrochemical Measurement Device According to the Present Embodiment]

As is shown in FIG. 1, the sensor unit 1 according to the present embodiment is additionally provided with a calibration mechanism 12 that is able to cause a calibration solution to come into contact repeatedly with sensor surfaces of the sensors 11 (namely, with the ion-sensitive membranes 111Nc and 111Kc of the two types of ion-selective electrodes 111), and to also take this calibration solution away from these sensor surfaces.

The calibration mechanism 12 holds calibration solution and is provided with a calibration solution holding portion 121 that is disposed so as to be able to come into contact with the sensor surfaces of the sensors 11, and with a fluid evaporation inhibiting portion 122 that inhibits evaporation of fluid from the calibration solution holding portion 121.

The calibration solution held in the calibration solution holding portion 121 is formed by a calibration component and a fluid containing water that are both held in the calibration solution holding portion 121, and this calibration solution is able to be suitably modified in accordance with the type of sensors provided in the sensor unit. In the present embodiment, an all-purpose calibration solution that is normally used to perform span calibration in cases in which a sodium ion concentration and a potassium ion concentration are being measured can be used. Specific examples thereof include standard solutions and the like whose sodium ion concentration or potassium ion concentration are already known.

In the present embodiment, the calibration solution holding portion 121 may hold the calibration solution, for example, by causing the interior of the calibration solution holding portion 121 to be impregnated with the calibration solution. Examples of the calibration solution holding portion 121 include materials formed by further impregnating a hydrogel that has already been impregnated with a fluid containing water with a calibration component and disposing these on a substrate having a 3-dimensional mesh structure or on a porous substrate, mesh-form materials that have been impregnated with a calibration solution made up of a fluid containing water and a calibration component, and film-shaped materials and the like.

A natural or synthetic polymer can be used as the material of the substrate that forms part of the calibration solution holding portion 121. Specific examples of such polymers include those given below.

Examples of a natural polymer include one or more selected from a group including, for example, alginic acid, chitosan, gelatin, collagen, hyaluronic acid, fibrinogen, silk fibroin, agarose, carrageenan, pectin, xanthan, cellulose, dextran, pullulan, lignin, starch, chondroitin sulfate, dermatan sulfate, heparin, keratin, elastin, Pluronic acid, and cotton.

Examples of a synthetic polymer include one or more selected from a group including, for example, polyethylene glycol, polyacrylic acid, polyvinyl alcohol, poly(N-isopropylacrylamide), poly 2-hydroxyethyl methacrylate, polyurethane, polypropylene glycol, polyethyleneimine, polymethyl methacrylate, polycaprolactone, polylactic acid, and polyglycolic acid.

As a result of the calibration solution holding portion 121 being internally housed inside the fluid evaporation inhibiting portion 122, a structure is created in which the calibration solution holding portion 121 is inhibited from being exposed to the outside air, so that evaporation of the fluid that forms part of the calibration solution from the calibration solution holding portion 121 is also inhibited. The fluid evaporation inhibiting portion 122 of the present embodiment is formed, for example, from a material that is able to inhibit fluid evaporation such as a resin through which a fluid is unable to permeate, and is a cap-shaped housing that covers the substrate on which the sensors 11 are mounted. More specifically, the fluid evaporation inhibiting portion 122 is formed as a rectangular parallelepiped-shaped housing having one face left open, and this open face portion is directed towards the sensors 11 side such that the calibration solution holding portion 121 housed inside the fluid evaporation inhibiting portion 122 is able to come into contact with the sensors 11. If, in this state, the fluid evaporation inhibiting portion 122 is fixed in position, for example, by attachment/detachment components such as claw portions or the like that are formed on the substrate on which the fluid evaporation inhibiting portion 122 and/or the ion-selective electrodes 111 are provided, then the calibration solution holding portion 121 can be sealed inside the fluid evaporation inhibiting portion 122 in a state in which the sensor surfaces are in close contact with the calibration solution holding portion 121.

The above-described calibration solution holding portion 121 and fluid evaporation inhibiting portion 122 are mutually adhered to each other so as to create a structure in which the calibration solution holding portion 121 and fluid evaporation inhibiting portion 122 are able to be removed together from the sensors 11. In the present embodiment, an adhesive agent layer 123 is formed between the calibration solution holding portion 121 and the fluid evaporation inhibiting portion 122, and the calibration solution holding portion 121 and the fluid evaporation inhibiting portion 122 are mutually adhered to each other via this adhesive agent layer 123. The substance forming the adhesive agent layer 123 that is used when adhering the calibration solution holding portion 121 and the fluid evaporation inhibiting portion 122 together is not particularly restricted and, for example, a commercially available two-sided tape, or a general-purpose adhesive agent such as epoxy silicone or the like may be used.

### [Electrochemical Measurement Method Using the Electrochemical Measurement Device According to the Present Embodiment]

A procedure for measuring a sodium ion/potassium ion concentration ratio in a test solution using the electrochemical measurement device 100 having the above-described structure will now be described.

In the electrochemical measurement method according to the present embodiment, prior to performing a measurement using as the test solution a sample solution whose ion concentration, which is the measurement target, is unknown, measurement values of the electrochemical measurement device 100 are calibrated by performing a measurement using as a calibration solution a standard solution in the form of a buffer solution whose ion concentration, which is the measurement target, is known.

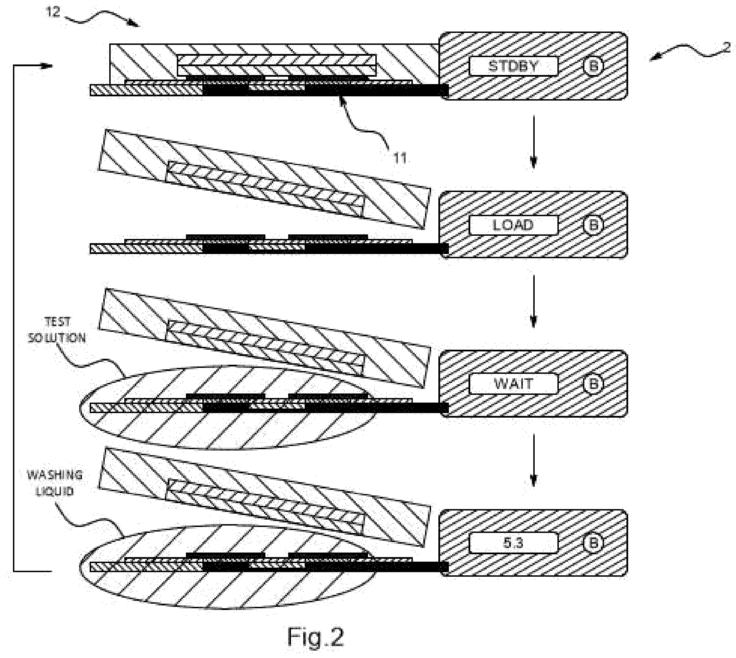

In the present embodiment, as is shown in FIG. 2, this calibration operation is performed in a state in which the above-described calibration mechanism has been installed in the sensors 11, and the calibration solution held in the calibration solution holding portion 121 is in contact with the sensor surfaces of the sensors 11.

The electrochemical measurement device 100 is set up so as to automatically start a calibration task when a user turns on the power of the electrochemical measurement device 100 after the calibration mechanism 12 has been installed in the sensors 11.

Once the calibration task has ended, the display unit 21 shows a display to the user urging the user to remove the calibration mechanism 12 from the sensors 11 so as to allow the sensors 11 to come into contact with the test solution.

After being shown this display, the user removes the calibration mechanism 12 from the sensors 11 by opening the cap. At this time, the calibration mechanism 12 may be completely taken out, however, as is shown in FIG. 2, it is also possible to employ a structure in which one end of the housing forming part of the fluid evaporation inhibiting portion 122 is fixed by means of a hinge or the like to a housing of the information processing unit, so as to create a structure that is easily opened and closed. In this case, this hinge portion corresponds to an attachment/detachment component.

Next, an appropriate quantity of test solution droplets are delivered into the test solution holder such that the sodium ion-sensitive membrane 111Nc and the potassium ion-sensitive membrane 111Kc are able to be in contact with the test solution.

Once the test solution droplets have been delivered, in the sodium ion-sensitive membrane 111Nc and the potassium ion-sensitive membrane 111Kc, electromotive force is generated that corresponds to the respective ion concentrations between the test solution and the ion-electron conversion layers 111Nd and 111Kd that have been put in place instead of the internal solution. This electromotive force is detected as potential differences (i.e., voltages) with the potentials of the test solution detected by the internal electrode 111Nb of the sodium ion-selective electrode 111N and the internal electrode 111Kb of the potassium ion-selective electrode 111K. Based on the detected signals, the calculation portion provided in the information processing unit 2 then employs a known method to calculate these potential differences as well as ion concentration ratios and the like that are based on these potential differences, and the calculated concentration ratios are displayed on the display unit 21.

Next, the display unit 21 shows a display to the user urging that the sensors 11 be rinsed using water or the like and that any water drops then be wiped off, and that the calibration mechanism 12 then be reinstalled in its original position. Once the user has reinstalled the calibration mechanism 12 on the sensors 11, the measurement processing sequence is ended.

### [Effects of the Present Embodiment]

According to the electrochemical measurement device 100 of the present embodiment that is formed in the manner described above, it is possible to demonstrate the following effects.

Because calibration is performed automatically prior to a measurement being made, a user is able to avoid the trouble of having to perform the calibration task themself. Furthermore, because there is provided the fluid evaporation inhibiting portion 122 that inhibits evaporation of fluid from the calibration solution holding portion 121, and because this fluid evaporation inhibiting portion 122 is able to be removed together with the calibration solution holding portion 121 from the sensors 11, it is possible to inhibit the evaporation of fluid from the calibration solution holding portion 121 as far as is possible without the entire calibration solution holding potion 121 being exposed to the outside air even while it is removed from the sensors 11.

Because the fluid evaporation inhibiting portion 122 is a housing that internally houses the calibration solution holding portion 121 inside itself, it is even more difficult for the surface of the calibration solution holding portion 121 to be exposed to the outside air, so that the evaporation of fluid can be even more reliably prevented.

While the calibration mechanism 12 is installed on the sensors 11, because the calibration solution being held in the calibration solution holding portion 121 is in contact with the sensor surfaces, compared with a case in which the sensors are made to start calibration or measurement from a completely dry state, the calibration time can be shortened and the measurement values can be stabilized.

Because the internal solution inside a common electrode 112 is rendered unnecessary and, furthermore, because the solid ion-electron conversion layers 111Nd and 111Kd that perform the functions of the internal solution are used instead of the internal solution in the ion-selective electrodes 111N and 111K, any housing or the like to hold an internal solution is not required, and this enables the sensor unit 1 itself to be made more compact compared to a conventional structure.

### [Additional Embodiments of the Present Invention]

Note that the present invention is not limited to the above-described embodiment.

In the above-described embodiment a structure is described in which the fluid evaporation inhibiting portion fulfills the role of a housing and internally houses the calibration solution holding portion inside itself, however, the present invention is not limited to this and it is also possible for the fluid evaporation inhibiting portion to be formed by a pliable packaging material. In addition, a structure may also be employed in which a plate-shaped fluid evaporation inhibiting portion or a film-shaped fluid evaporation inhibiting portion and a plate-shaped calibration solution holding portion or a film-shaped calibration solution holding portion are mutually adhered together, and in which the fluid evaporation inhibiting portion and the calibration solution holding portion can be detached from and reattached to the sensors using, for example, an attachment/detachment component such as a solid band or the like that is provided separately from the fluid evaporation holding portion.

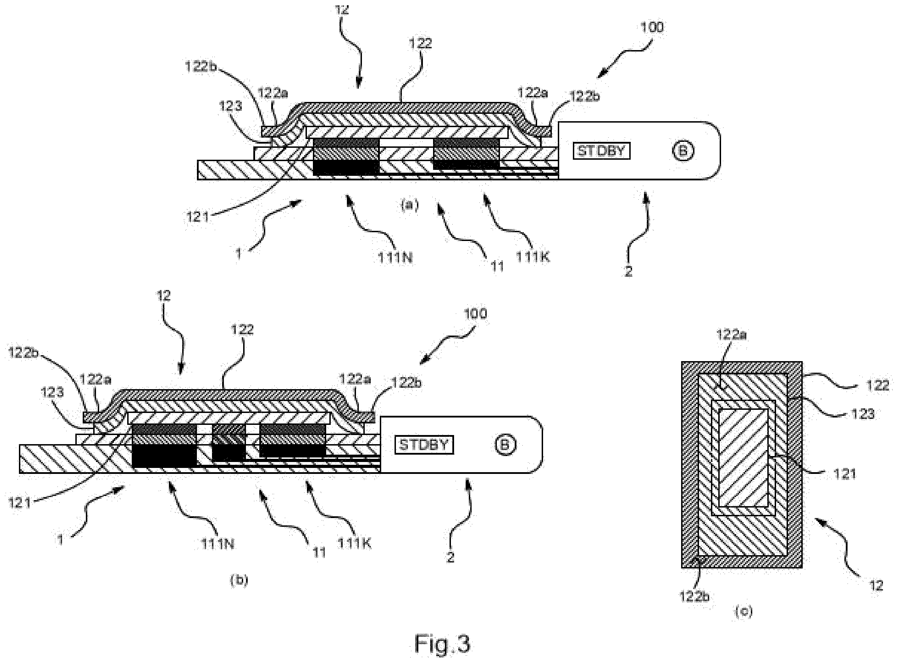

In other words, as is shown, for example, in FIGS. 3 (a) ~ (c), it is also possible to employ a structure in which a calibration solution holding portion is stacked on top of a plate-shaped or film-shaped fluid evaporation inhibiting portion, and the calibration solution holding portion is formed sufficiently large to enable it to cover the sensor surfaces of the sensors 11 (for example, surfaces that come into contact with the respective ion-responsive membranes and salt bridge sample solutions), and in which the fluid evaporation inhibiting portion is formed slightly larger than the calibration solution holding portion such that an outer edge portion of the fluid evaporation inhibiting portion is positioned on the outer side of an outer edge of the calibration solution holding portion. In this case, in a state in which the calibration solution holding portion has been put in place so as to be able to come into contact with the sensor surfaces, by pressing the calibration mechanism against the sensors, the outer edge portions of the fluid evaporation inhibiting portion, which are positioned on the outer side of the calibration solution holding portion, are pressed against the surfaces of the sensors (for example, against the substrate) and are thus in contact with the sensors. Therefore, by providing a sensor adhering portion 122a in which the fluid evaporation inhibiting portion is fixed to the sensors by adhering to the sensors at least a portion of the outer edge portion of the fluid evaporation inhibiting portion that comes into contact with these sensors, and by then forming an adhesive agent layer on top of this sensor adhering portion 122a, it is possible to fix the calibration mechanism in position with the calibration solution holding portion in a state of being pressed against the sensor surfaces. Note that, in FIG. 3, the sensor adhering portion 122a is formed extending around the entire circumference of the outer edge portion of the fluid evaporation inhibiting portion, however, the present invention is not limited to this. For example, it is also possible for a plurality of sensor adhering portions 122a to be formed at equidistant intervals from each other in a ring shape, or for a plurality of these equidistantly placed sensor adhering portions 122a to be removed from this ring shape (for example, so as to form a C shape). From the standpoint of enabling the calibration mechanism to be easily repeatedly detached from and reattached to the sensors, it is preferable that, for example, an epoxy silicone-based adhesive agent be used as the adhesive agent forming the adhesive agent layer. In this embodiment, the calibration solution holding portion is in a plate shape or in a film shape, however, it is also possible for the calibration solution holding portion to be in gel form, and for the calibration solution holding portion and fluid evaporation inhibiting portion to be created via a molding process such that the fluid evaporation inhibiting portion is located on top of the fluid evaporation inhibiting portion. Moreover, the fluid evaporation inhibiting portion and the calibration solution holding portion may be adhered together via an adhesive layer, or the calibration solution holding portion itself may be provided with adhesiveness and the calibration solution holding portion may then be placed in direct contact with the fluid evaporation inhibiting portion without any adhesive component such as an adhesive agent layer or double-side tape or the like being interposed therebetween. In the case of this embodiment, in order to enable the calibration mechanism to be easily repeatedly detached from and reattached to the sensors, an end of one portion of an outer edge portion of the above-described fluid evaporation inhibiting portion is left as a tab portion 122b that serves as a tab when peeling off the portion of the fluid evaporation inhibiting portion that is not adhered to the sensor surfaces. In this embodiment, this tab portion serves as the attachment/detachment component of the present embodiment.

In the above-described embodiments a case is described in which the electrochemical measurement device measures a sodium ion/ potassium ion concentration ratio, which is an electrochemical characteristic of the test solution which is serving as the measurement target, however, the present invention is not limited to this and it is also possible, for example, for the sodium ion concentration and/or the potassium ion concentration of the test solution to be measured.

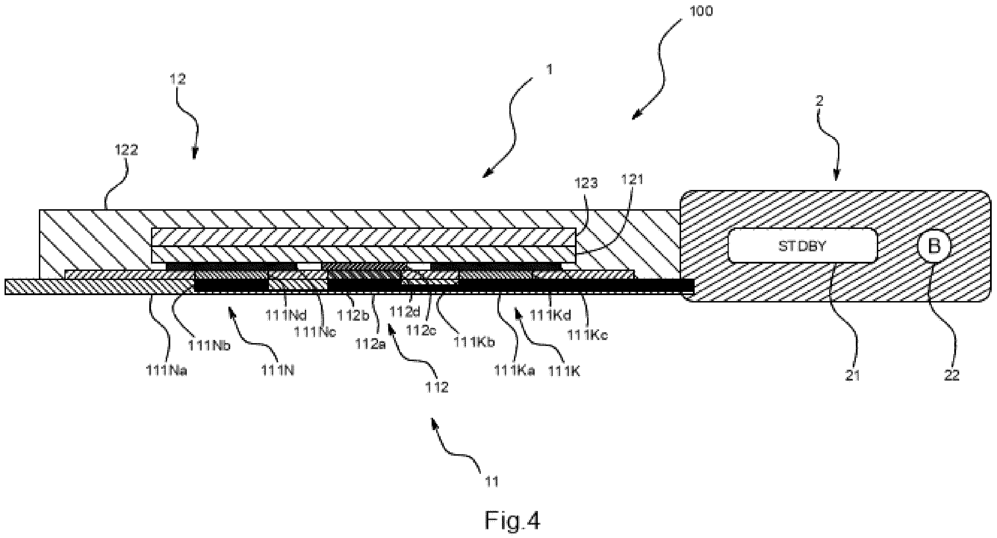

In this case, as is shown, for example, in FIG, 3 (b) and FIG. 4, it is also possible for there to be provided a common electrode 112 that functions as a reference electrode for the sodium ion-selective electrode 111N and the potassium ion-selective electrode 111K.

The common electrode 112 is provided with a substrate 112a, an internal electrode 112b that is formed, for example, by a silver electrode that is provided on top of the substrate 112a, a salt bridge layer 112c that is provided on top of the internal electrode 112b, and an ion-electrode conversion layer 112d that is interposed between the internal electrode 112b and the salt bridge layer 112c so as to electrically connect these to each other. In the present embodiment, a structure having the same composition as the above-described ion-electron conversion layers 111Nd and 111Kd is used for the ion-electrode conversion layer 112d. It is not essential that the compositions of ion-electrode conversion layers 111Nd, 111Kd, and 112d all be the same compositions, and different compositions may be used where this is appropriate.

The salt bridge layer 112c contains, for example, a hydrophobic ionic liquid and an adhesive agent.

A commonly known hydrophobic ionic liquid such as those described, for example, in WO2021/177178A1 and, in particular, P₄₄₄MOEBETI (tributyl(2-methoxyethyl) phosphonium·bis(pentafluoroethanesulfonyl)imide) and the like may be used as the hydrophobic ionic liquid.

As the adhesive agent, compounds containing one or two or more types selected from among polyvinyl chloride (PVC), polystyrene, acrylate, polyvinyl butyral, polyamide, polyimide, polyurethane, polytetrafluoroethylene (PTFE), polysiloxane, copolymers of vinylidene fluoride and hexafluoropropylene (PVDF-HFP), and fluoropolysiloxane may be preferably used. These adhesive agents may be used individually or may be used in combinations of a plurality of different types. In addition, the adhesive agent may also contain a plasticizer in addition to the compounds described above.

Note that, normally, an ion-electron conversion layer and an internal solution are also required in the common electrode 112 in order to obtain a reference potential, however, by using, for example, the common electrode 112 that is provided with the internal electrode 112b that is formed from Ag or the like, as in the present embodiment, and making the activity of the chloride ions of the standard solution for the zero calibration the same as the activity of the chloride ions of the standard solution for the span calibration, it is possible to eliminate the necessity of providing an ion-electron conversion layer and an internal solution in the common electrode 112.

It is also possible for a broad range of electrodes to be used for the internal electrode 112b of the common electrode 112, such as an electrode formed from a metal other than Ag, or for an Ag/AgCl electrode, an Ag/AgBr electrode, or an Ag/AgI electrode or the like to be used.

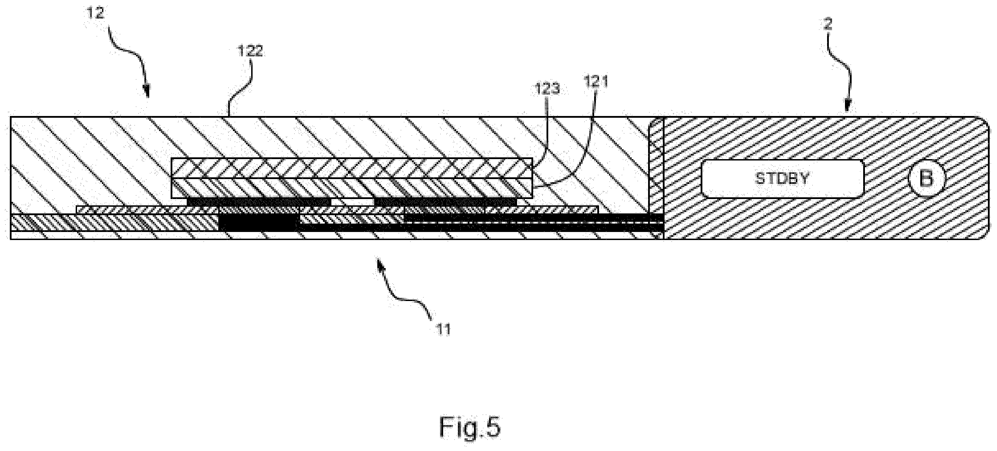

For example, as is shown in FIG. 5, it is also possible for the housing forming the fluid evaporation inhibiting portion 122 to be formed so as to be able to internally house all of the other components forming the sensor unit 1 inside itself.

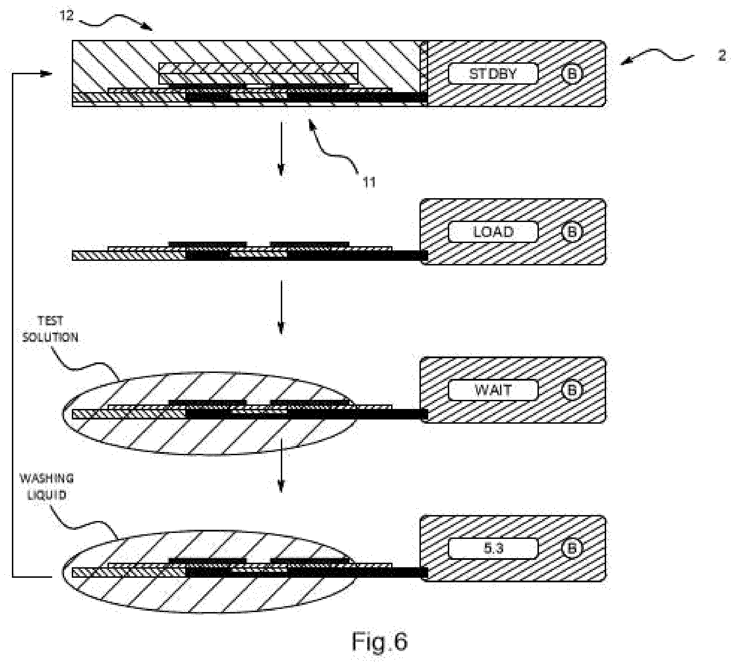

In this case, as is shown in FIG. 6, for example, a slit-shaped opening may be formed in one end in a longitudinal direction of the rectangular parallelepiped-shaped housing forming the fluid evaporation inhibiting portion 122. The calibration mechanism 12 may then be attached or detached by inserting or retracting the substrate on which the sensors 11 are mounted through this opening. By employing this type of structure, the calibration solution holding portion 121 is still covered by the fluid evaporation inhibiting portion 122 even after the calibration mechanism 12 has been removed, so that it is difficult for the calibration solution holding portion 121 to be exposed to the outside air and fluid evaporation from the calibration solution holding portion 121 can be inhibited even more efficiently.

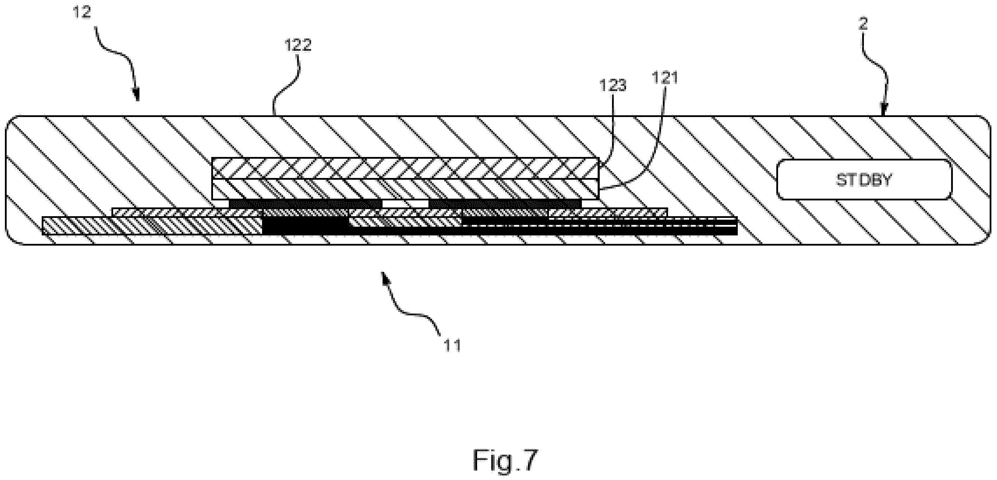

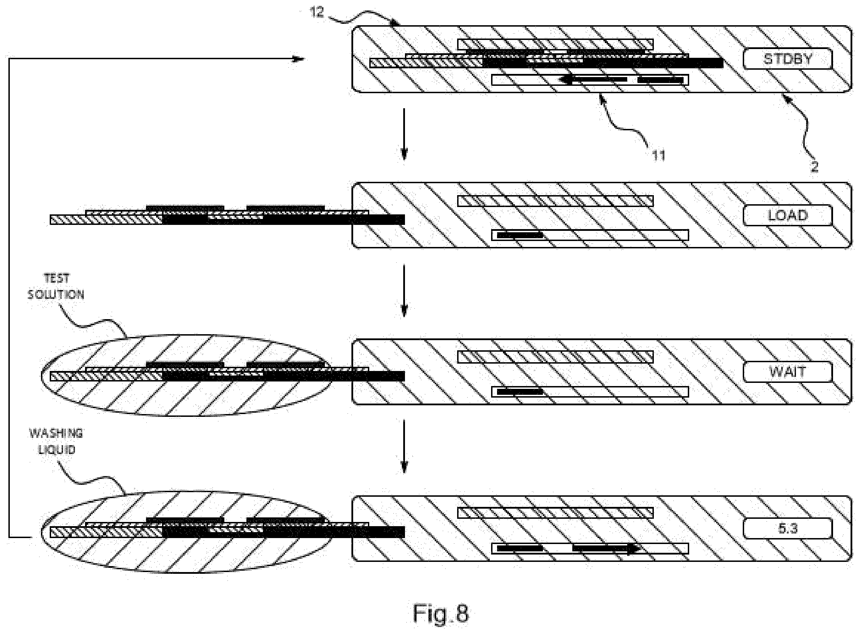

Moreover, as is shown, for example, in FIG. 7, it is also possible to employ a structure in which the housing forming the fluid evaporation inhibiting portion 122 is provided integrally with the housing forming the information processing unit so as to form a single housing for the entire electrochemical measurement device 100. In this case, as shown, for example, in FIG. 8, a structure may be employed in which a slide button 14 that causes the sensors 11 to slide to the outside of the housing is provided as the attachment/detachment component, and as a result of a user operating this slide button 14 the sensors 11 are moved to outside the housing when a measurement is being made so as to enable the sensors 11 to come into contact with the test solution. In this case, it is preferable that both the housing forming the fluid evaporation inhibiting portion 122 and the housing forming the information processing unit be formed from the same material, and it is also preferable that a plastic or the like having a sufficient degree of strength be used as this material.

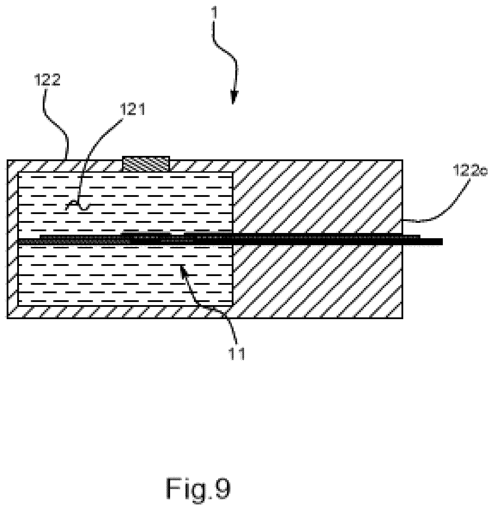

As is shown, for example, in FIG. 9, it is also possible to employ a structure in which the calibration solution holding portion 121 is a gel that contains a fluid containing water and a calibration component forming the calibration solution, and in which the calibration mechanism 12 is formed by loading this gel into the interior of the fluid evaporation inhibiting mechanism 122. In this case, the adhesive agent layer is not required.

In this case, as is shown in FIG. 9, the calibration mechanism 12 may be detached or reattached by inserting the sensors 11 into the gel that is serving as the calibration solution holding portion 121 or removing the sensors therefrom through the slit formed in the fluid evaporation inhibiting mechanism 122.

In a case such as that shown in FIG. 9, it is preferable that a structure be employed in which there are as few as possible bumps and indentations on the surfaces of the sensors 11 so that, when the sensors 11 are being removed via the slit, the gel that is serving as the calibration solution holding portion 121 can be removed from the sensors 11 together with the fluid evaporation inhibiting portion 122, and in which the slit is formed having a size and shape such that, when the sensors 11 have been inserted through the slit in the fluid evaporation inhibiting portion 122, the end portion 122c of the fluid evaporation inhibiting portion 122 forming the slit is left in contact with the sensors 11, so that when the sensors 11 are being withdrawn through the slit, the slit is in close contact with the surfaces of the sensors 11.

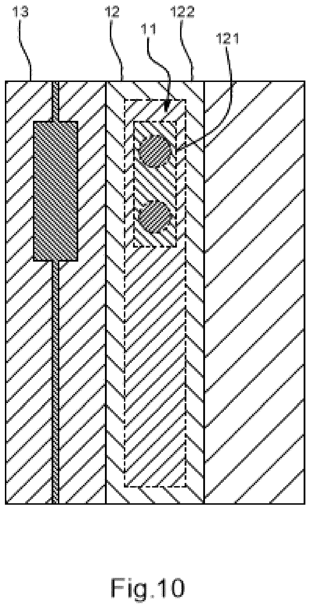

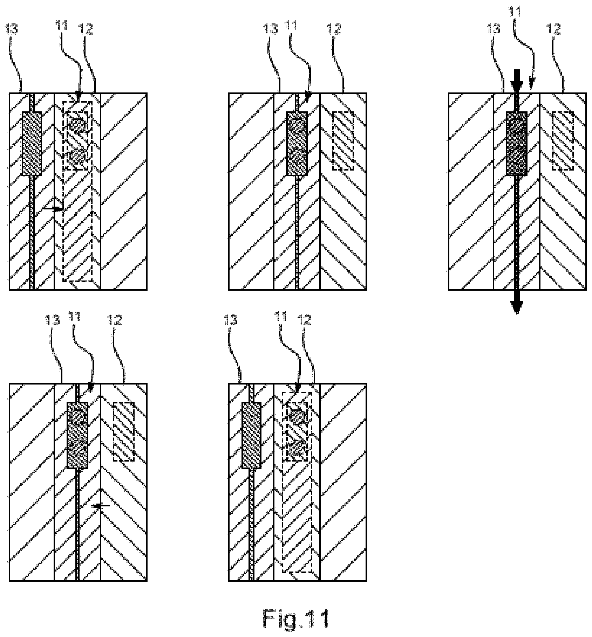

It is also possible to employ a structure in which, as is shown in FIG. 10, the sensor unit is provided with the sensors 11, the calibration mechanism 12, and a flow block 13 that is able to internally house the test solution inside itself, and in which, as is shown in FIG. 11, the calibration mechanism 12 and the flow block 13 are mounted so as to be able to slide over the substrate on which the sensors 11 are provided.

In a case in which a sensor unit formed in this manner is used, as is shown in FIG. 11, in a case in which a measurement is not being made, once the calibration mechanism 12 has been disposed so as to be positioned above the sensor surfaces of the sensors 11 and the calibration has ended, the calibration mechanism 12 and the flow block 13 are made to slide over the substrate so that flow block 13 is disposed so as to be positioned above the sensor surfaces of the sensors 11. In this state, the test solution is supplied to the sensor surfaces through a flow path formed in the flow block 13. When the measurement has ended, water or the like is supplied to the flow bock 13 in order to wash the sensor surfaces and, thereafter, the flow block 13 and the calibration mechanism 12 are made to slide to their original positions. These sliding operations of the calibration mechanism 12 and the flow block 13 may be performed manually by a user, however, it is also possible for the electrochemical measurement device 100 to be provided with a control unit and drive unit and the like (not shown in the drawings) that control calibrations and measurements as well as the distribution of solutions. In this case, it is possible to form a structure in which the user simply turns on the power of the electrochemical measurement device 100 and, thereafter, calibrations and measurements are performed automatically. In this case, the grooves, claws, and recessed portions and the like that are used when each block is made to slide may be provided as attachment/detachment components.

Furthermore, it should be understood that the present invention is not limited to the above-described embodiments, and that various modifications and the like may be made thereto insofar as they do not depart from the spirit or scope of the present invention.

### DESCRIPTION OF THE REFERENCE CHARACTERS

- 100: Electrochemical Measurement Device
- 1: Sensor Unit
- 11: Sensors
- 12: Calibration Mechanism
- 121: Calibration Solution Holding Portion
- 122: Fluid Evaporation Inhibiting Portion
- 2: Information Processing Unit

## Claims

1. A calibration mechanism for an electrochemical measurement device comprising:
a calibration solution holding portion that holds a fluid and a calibration component forming a calibration solution that is used to calibrate an electrochemical measurement device that is provided with an ion-selective electrode; and
a fluid evaporation inhibiting portion that inhibits evaporation of the fluid from the calibration solution holding portion, wherein
the calibration solution holding portion is able to be detached from and reattached to the ion-selective electrode, and the fluid evaporation inhibiting portion is able to be detached from and reattached to the ion-selective electrode together with the calibration solution holding portion.

2. The calibration mechanism for an electrochemical measurement device according to Claim 1, further comprising an attachment/detachment component that is used to detach the fluid evaporation inhibiting portion and the calibration solution holding portion from the ion-selective electrode, and to reattach the fluid evaporation inhibiting portion and the calibration solution holding portion to the ion-selective electrode.

3. The calibration mechanism for an electrochemical measurement device according to Claims 1 or 2, wherein
the fluid evaporation inhibiting portion is a film-shaped object, and
the calibration solution holding portion is stacked on top of the fluid evaporation inhibiting portion, and
the fluid evaporation inhibiting portion and the calibration solution holding portion are disposed such that an outer edge portion of the fluid evaporation inhibiting portion is positioned on an outer side of an outer edge of the calibration solution holding portion, and a sensor adhering portion that fixes the fluid evaporation inhibiting portion and the calibration solution holding portion to the ion-selective electrodes is formed in at least a portion of the outer edge portion.

4. The calibration mechanism for an electrochemical measurement device according to Claim 1, wherein
the calibration solution holding portion is in gel form, and
the fluid evaporation inhibiting portion is a housing that internally houses the calibration solution holding portion.

5. The calibration mechanism for an electrochemical measurement device according to Claim 4, wherein
the fluid evaporation inhibiting portion is formed so as to be able to internally house the ion-selective electrodes in a state in which the ion-selective electrodes are in contact with the calibration solution holding portion.

6. The calibration mechanism for an electrochemical measurement device according to Claim 1, wherein
the calibration solution holding portion is in solid form, and
the calibration solution holding portion and the fluid evaporation inhibiting portion are mutually adhered to each other.

7. A sensor unit comprising the calibration mechanism for an electrochemical measurement device according to any one of Claims 1 through 6, and an ion-selective electrode.

8. An electrochemical measurement device comprising the sensor unit according to Claim 7.

9. A calibration method for an electrochemical measurement device that comprises:
a calibration solution holding portion that holds a fluid and a calibration component forming a calibration solution that is used to calibrate an electrochemical measurement device that is provided with an ion-selective electrode; and
a fluid evaporation inhibiting portion that inhibits evaporation of the fluid from the calibration solution holding portion, and that,
using a calibration mechanism for an electrochemical measurement device that is **characterized in that** the calibration solution holding portion is able to be detached from and reattached to the ion-selective electrode, and the fluid evaporation inhibiting portion is able to be detached from and reattached to the ion-selective electrode together with the calibration solution holding portion, calibrates an electrochemical measurement device that is provided with an ion-selective electrode.
